# EUROPÄISCHE PATENTSCHRIFT

(11) **EP 3 566 416 B1**
(45) Veröffentlichungstag und Bekanntmachung des Hinweises auf die Patenterteilung: **18.03.2020**
(21) Anmeldenummer: 18732328.2
(22) Anmeldetag: 18.06.2018
(51) Int. Cl.: H04L 29/06, H04L 9/32, G06F 21/42, H04L 29/08

(54) **VERFAHREN ZUR ÜBERPRÜFUNG DES DATENTRANSPORTS ÜBER EINE ZWISCHEN ZWEI ERSTEN SCHNITTSTELLENEINHEITEN REALISIERTE ERSTE KOMMUNIKATIONSVERBINDUNG ZWISCHEN ZWEI DATENVERARBEITUNGSEINRICHTUNGEN UND KRAFTFAHRZEUG**
METHOD FOR CHECKING THE DATA TRANSPORT ACROSS A FIRST COMMUNICATION CONNECTION BETWEEN TWO DATA PROCESSING DEVICES, SAID FIRST COMMUNICATION CONNECTION BEING REALIZED BETWEEN TWO FIRST INTERFACE UNITS, AND MOTOR VEHICLE
PROCÉDÉ DE CONTRÔLE DU TRANSPORT DE DONNÉE PAR LE BIAIS D'UNE PREMIÈRE LIAISON DE COMMUNICATION RÉALISÉE ENTRE DEUX PREMIÈRES UNITÉS D'INTERFACE ENTRE DEUX SYSTÈMES DE TRAITEMENT DE DONNÉES ET VÉHICULE AUTOMOBILE

(30) Priorität: 26.07.2017 DE 102017212809
(43) Veröffentlichungstag der Anmeldung: 13.11.2019
(73) Patentinhaber: Audi AG, 85045 Ingolstadt (DE)
(72) Erfinder: KLEIN, Markus, 85104 Pförring (DE); ZAWADZKI, Kamil, 81827 München (DE); AHN, Changsup, 85057 Ingolstadt (DE); SCHMAILZL, Michael, 85092 Kösching (DE)
(86) Internationale Anmeldenummer: PCT/EP2018/066076
(87) Internationale Veröffentlichungsnummer: WO 2019/020276

(56) Entgegenhaltungen:
- US-A1- 2009 196 296
- US-A1- 2009 327 724
- US-A1- 2014 189 809

## Beschreibung

Die Erfindung betrifft ein Verfahren zur Überprüfung des Datentransports von Nutzdaten über eine zwischen zwei ersten Schnittstelleneinheiten realisierte erste Kommunikationsverbindung zwischen zwei jeweiligen Datenverarbeitungseinrichtungen, wobei die zu übertragenden Nutzdaten in Nutzdatenblöcke aufteilbar sind und wobei wenigstens eine zweite Kommunikationsverbindung zwischen den Datenverarbeitungseinrichtungen besteht, die über jeweilige zweite Schnittstelleneinheiten aufgebaut wird. Die Erfindung betrifft ferner ein Kraftfahrzeug.

Die Datenverarbeitungssysteme moderner Gesamtvorrichtungen, die datenverarbeitende Funktionen bereitstellen sollen, werden immer komplexer und benötigen in vielen Fällen eine Mehrzahl von Datenverarbeitungseinrichtungen, die Nutzdaten untereinander übertragen, um diese auf unterschiedliche Arten zu verarbeiten, beispielsweise für weitere Datenverarbeitungseinrichtungen aufzubereiten, Steuersignale zu erzeugen und/oder auch die Nutzdaten abschließend einzusetzen, was beispielsweise im Fall von Anzeigeinformationen als Nutzdaten gilt, die über eine Anzeigevorrichtung als Datenverarbeitungseinrichtung, beispielsweise ein Display, wiedergegeben werden sollen. Neben Gesamtvorrichtungen, in denen die einzelnen Datenverarbeitungseinrichtungen dem System fest zugehörig sind, insbesondere in einer gemeinsamen Baueinheit verbaut sind, wurden auch bereits verteilte Datenverarbeitungssysteme vorgeschlagen, in denen Datenverarbeitungseinrichtungen unterschiedlichen Gesamtvorrichtungen zugeordnet sein können. Ein Beispiel hierfür ist beispielsweise die kooperative Datenverarbeitung zwischen einem Mobilgerät, beispielsweise einem Mobiltelefon, und einem Kraftfahrzeug. In diesem Kontext schlägt DE 10 2011 015 259 A1 vor, eine Kommunikationsverbindung zwischen dem Fahrzeug und der tragbaren Vorrichtung herzustellen, wobei über diese Kommunikationsverbindung zunächst eine Authentifizierung einer Host-Softwareanwendung erfolgen kann, die durch einen Abfrage-Antwort-Authentifizierungsprozess (Challenge-Response-Authentifizierung) erfolgen kann.

Eine Gesamtvorrichtung, in der ein Datentransport zwischen unterschiedlichen Datenverarbeitungseinrichtungen stattfindet, stellt ein modernes Kraftfahrzeug dar. Beispielsweise existieren dort eine Vielzahl von Steuergeräten als Datenverarbeitungseinrichtungen, die mit weiteren Steuergeräten und/oder Funktionselementen des Kraftfahrzeugs kommunizieren. Eine für Kraftfahrzeuge wichtige Art von Funktionselementen sind Anzeigevorrichtungen, insbesondere solche, auf denen ein Nutzer verlässlich und in einem bestimmten Erscheinungsbild Informationen zum Betrieb des Kraftfahrzeugs erwartet, insbesondere auch den Fahrbetrieb betreffende Informationen wie Geschwindigkeiten, Verkehrssituationsdaten und dergleichen. Ist als Anzeigevorrichtung und somit Datenverarbeitungseinrichtung beispielsweise ein Display vorgesehen, sind die entsprechend darzustellenden Frames/Bilddaten als Nutzdaten über eine Kommunikationsverbindung von dem Steuergerät an die Anzeigevorrichtung zu übertragen, wobei meist schnelle Datenübertragungswege und Kommunikationsstandards eingesetzt werden, beispielsweise LVDS-Verbindungen (Low Voltage Differential Signaling). Üblicherweise als Mikrochips ausgebildete Schnittstelleneinheiten der jeweiligen Datenverarbeitungseinrichtungen wandeln dabei die Bilddaten in ein geeignet zu übertragendes Format um. Im konkreten Beispiel können solche Schnittstelleneinheiten beispielsweise als LVDS-Chips ausgebildet sein. Neben dieser ersten, üblicherweise eine hohe Geschwindigkeit und/oder eine hohe Bandbreite aufweisenden Kommunikationsverbindung, die zwischen den beschriebenen ersten Schnittstelleneinheiten gebildet wird, sind Datenverarbeitungseinrichtungen häufig auch über wenigstens eine zweite Kommunikationsverbindung verbunden, die beispielsweise über ein Netzwerk, hier einen Kraftfahrzeugbus, insbesondere einen CAN-Bus, realisiert werden kann. Auf diese Weise können weniger zeitkritische Informationen ausgetauscht werden, beispielsweise Rückmeldungen einer auch als Bedieneinrichtung ausgebildeten Anzeigevorrichtung, insbesondere eines Touchscreens als Displayvorrichtung. Bei den der zweiten Kommunikationsverbindung zugeordneten zweiten Schnittstelleneinheiten handelt es sich meist um übliche Netzwerkschnittstellen bzw. Busschnittstellen. Diese können ebenso als Mikrochip bzw. integrierte Schaltung (ASIC) realisiert sein.

Gerade bei Displays, aber auch bei sonstigem Datentransport in Kraftfahrzeugen, besteht teilweise das Interesse dritter Parteien, sich in den Nutzdatenstrom einzuschalten bzw. diesen durch eigene Nutzdaten zu ersetzen oder zu verändern. Beispielsweise könnte für eine Displayvorrichtung eines Kraftfahrzeugs das bisherige, die darzustellenden Bilddaten als Nutzdaten liefernde Steuergerät zumindest zeitweise von dem Display abgetrennt werden, um diesem einen anderen Nutzdatenstrom zuführen zu können. Beispielsweisen sollen auf diese Art und Weise modifizierte Benutzerinterfaces oder dergleichen geschaffen werden. Es kann also gesagt werden, dass aktuell jegliches Display innerhalb eines Kraftfahrzeugs (oder auch in sonstigen Gesamtvorrichtungen) auch durch Drittanbieter angesprochen werden kann. Dabei wurde bereits vorgeschlagen, Bilddaten als Nutzdaten durch die erste Schnittstelleneinheit zu verschlüsseln, jedoch werden hier, beispielsweise im LVDS-Fall, üblicherweise Schlüssel verwendet, auf die auch derartige Drittanbieter problemlos Zugriff erlangen.

Von Seiten der Hersteller solcher Gesamtvorrichtungen, insbesondere von Kraftfahrzeugen, besteht daher das Interesse, derartigen ungewollten Zugriff möglichst zu vermeiden. Doch auch darüber hinaus besteht das Interesse, nur gewollte Inhalte auf Anzeigevorrichtungen als Datenverarbeitungseinrichtungen in Kraftfahrzeugen wiederzugeben, da die dargestellten Informationen gegebenenfalls wichtig für die Einschätzung der Verkehrssituation durch einen Fahrer sein können, mithin Sicherheitsaspekte betroffen sein können. Dabei wurden bereits Möglichkeiten vorgeschlagen, auch Bilddaten, insbesondere Videodaten, zu authentifizieren, beispielsweise durch Verwendung digitaler Signaturen oder Wasserzeichen-Techniken, wobei zudem auf künstliche Intelligenz beruhende Varianten bekannt sind. Diese haben insgesamt gemein, dass ein hoher Aufwand an Hardware und/oder Software zur Verschlüsselung und/oder zur jeweiligen Berechnung zu treiben ist.

US 2009/0 210 707 A1 offenbart ein Out-of-band-Authentifizierungsverfahren und ein System zur Kommunikation über ein Datennetzwerk. Dabei wird vorgeschlagen, einen Datenstrom von einem Sender über einen ersten, insbesondere nichtsicheren Kanal zu übertragen. Der Sender erzeugt Authentifizierungsdaten für den Datenstrom, die über einen zweiten, insbesondere sicheren, Kanal übertragen werden. Der Empfänger überprüft den Datenstrom anhand der Authentifizierungsdaten.

US 2005/0228983 A1 betrifft einen Netzwerk-Seitenkanal für ein Nachrichtenboard. Es wird ein sicherer Seitenkanal zur Erweiterung des Nachrichtenboard-Protokolls vorgeschlagen, der neben einem unsicheren Legacy-Kanal genutzt werden soll. Der Seitenkanal kann für Hashdaten zur Überprüfung von über den Legacy-Kanal gesendeten Legacy-Daten genutzt werden.

US 2009/0196296 A1 betrifft die Datenverifikation durch eine Challenge. Sie beschreibt einen Server in einem Netzwerk, der Dateien oder Teile von Dateien speichern soll. Der Server bekommt diese Dateien oder Teile von Dateien und ordnet diesen über einen entsprechenden Hashalgorithmus einem Hashwert zu. Soll nun der Datenverkehr im Netzwerk reduziert werden, wird zunächst der Hashwert einer zu übersendenden und zu speichernden Dateneinheit übertragen, seitens des Servers überprüft, ob dieser Hashwert bereits vorliegt, und wenn ja, kein Übertragen und kein Speichern vorgenommen. Jedoch kann es vorkommen, das unterschiedliche Dateneinheiten denselben Hashwert haben, so dass eine sogenannte "Hash Collision" auftritt. Dies ist dort diskutierte Problem. Zur Lösung soll nur im Fall übereinstimmender Hashwerte eine "Vorabprobe" beziehungsweise "Biopsie" der Dateneinheit angefordert wird, um festzustellen, ob es sich wirklich um dieselbe Dateneinheit handelt. Ist die Dateneinheit bereits im Server gespeichert, muss sie nicht übertragen werden, ansonsten wird sie übertragen und ein Hinweis auf die Hash-Kollision wird gespeichert.

US 2014/0189809 A1 betrifft Verfahren und Vorrichtungen für serverseitige Authentifizierung und Autorisierung für mobile Clients ohne eine Modifikation von klientenseitigen Applikationen. Der Zugriff von durch Mobiltelefone auszuführenden sogenannten "Apps" soll autorisiert und authentifiziert werden, ohne dass diese "App" selbst modifiziert sein soll, nachdem es hierfür noch keinen Standard gibt. Entsprechend wird eine Zusatz-App vorgeschlagen, die die Sicherheit handhaben soll und dabei eine Challenge über einen speziellen, zweiten Kanal desselben Kommunikationsnetzwerks senden soll.

Der Erfindung liegt daher die Aufgabe zugrunde, eine Möglichkeit zur Überprüfung bzw. Authentifizierung des Datentransports zwischen zwei Datenverarbeitungseinrichtungen anzugeben, die einfach umzusetzen ist, auf tatsächlich zu überprüfende Kommunikationsverbindungen beschränkt werden kann und lediglich eine geringe Rechenleistung benötigt.

Zur Lösung dieser Aufgabe ist bei einem Verfahren der eingangs genannten Art erfindungsgemäß vorgesehen, dass zur Realisierung einer Challenge-Response-Authentifizierung als Challenge eine Abfragen zufällig gewählter Dateneinheiten aus identifizierbaren, zufällig gewählten Nutzdatenblöcken der Nutzdaten, wobei die abgefragten Nutzdaten Antwortdaten bilden, fordernde Anfrage von einer Authentifizierungseinheit unter Nutzung der zweiten Kommunikationsverbindung an die ersten Schnittstelleneinheiten gesendet wird, eine Authentifizierungsbaugruppe der jeweiligen ersten Schnittstelleneinheiten die angeforderten Antwortdaten aus den Nutzdaten extrahiert und an die Authentifizierungseinheit rückübermittelt und eine erfolgreiche Überprüfung bei Übereinstimmung der Antwortdaten der jeweiligen Authentifizierungsbaugruppen festgestellt wird.

Die vorliegende Erfindung bietet somit eine einfach zu realisierende, skalierbare Möglichkeit zur Authentifizierung von Dateninhalten, insbesondere Bilddaten, beispielsweise Videoströmen. In einem fest installierten System, also einer Gesamtvorrichtung, kann der Datentransport zwischen wenigstens einem Paar von Datenverarbeitungseinrichtungen überprüft werden, mithin festgestellt werden, ob die Daten unverändert die empfangende Datenverarbeitungseinrichtung erreichen. Hierzu wird eine spezielle Ausgestaltung einer Challenge-Response- Authentifizierung vorgeschlagen, die mittels einer besonders ausgestalteten Anfrage ("Challenge") die erfolgreiche Datenübertragung der Nutzdaten durch Stichprobenentnahme möglichst nah am Beginn und am Ende der ersten Kommunikationsverbindung plausibilisiert. Die eigentliche Abfrage der wiederzugebenden Dateneinheiten ist hierbei ersichtlich einfach möglich, solange die Nutzdatenblöcke und die Dateneinheiten darin identifizierbar sind, wobei die eigentliche Komplexität und Sicherung der Challenge in der ad hoc nicht bekannten, zufälligen Auswahl der abzufragenden Dateneinheiten besteht, welche mittels einer bevorzugt als Mastereinheit ausgebildeten Authentifizierungseinheit, die Teil einer der Datenverarbeitungseinrichtungen sein kann, gebildet wird. Um einen einfachen Abgriff und somit eine einfache Möglichkeit zum Generieren der korrekten Antwortdaten durch eine weitere Recheneinrichtung, beispielsweise die eines Drittanbieters, welche auch die zweite Kommunikationsverbindung überwacht, zu vermeiden, ist es im Rahmen der vorliegenden Erfindung im Übrigen besonders bevorzugt, die über die zweite Kommunikationsverbindung zu übertragenden Anfragen mit einer Verschlüsselung zu versehen, was häufig in modernen Gesamtvorrichtungen, insbesondere Kraftfahrzeugen, häufig ohnehin möglich ist, das bedeutet, die entsprechenden Verschlüsselungsmittel liegen vor, bevorzugt seitens der zweiten Schnittstelleneinheiten. Hierauf wird im Folgenden noch näher eingegangen werden.

Eine wesentliche Voraussetzung für die Realisierung der vorliegenden Erfindung ist, dass Nutzdatenblöcke im Nutzdatenstrom voneinander trennbar sind, beispielsweise also im Fall von Videodaten eine Framebeginn-Markierung (Framebeginnanzeiger) bei Frames als Nutzdatenblöcken vorliegt, auf die zur Authentifizierung der Nutzdatenblöcke aufgesetzt werden kann und die es ermöglicht, Dateneinheiten innerhalb eines bestimmten Nutzdatenblocks abzufragen. Es sei angemerkt, dass dies bei Videodaten häufig ohnehin bereits gegeben ist, beispielweise in Form von Video-Synchhronisationssignalen (bepsw. "Blanklines"). Auch bei der Nutzung einer paketbasierten Datenübertragung der Nutzdaten ist durch die Nutzdatenpakete als Nutzdatenblöcke bereits eine entsprechende Identifizierbarkeit gegeben.

Nachdem die Umsetzung der Anfrage, also der Abfragevorgang der Dateneinheiten, leicht hardwaretechnisch umgesetzt werden kann, ist eine kostengünstige Hardwaremodifikation der ersten Schnittstelleneinheiten an dieser Stelle ausreichend, indem einfach eine entsprechende Authentifizierungsbaugruppe hinzugefügt wird. Die Authentifizierungsbaugruppe kann beispielsweise entsprechende Schaltelemente, die auf einem Mikrochip als erste Schnittstelleneinheit realisiert werden können, umfassen. Dabei muss zwischen sendenden ersten Schnittstelleneinheiten und empfangenden ersten Schnittstelleneinheiten nicht unterschieden werden, das bedeutet, für beide Fälle können dieselben Authentifizierungsbaugruppen eingesetzt werden, solange die Position in der Datenverarbeitungskette identisch ist. Die Position in der Datenverarbeitungskette ist dabei möglichst nah am eigentlichen Datenausgang auf die erste Kommunikationsverbindung zu wählen, um den Datentransport der Nutzdaten möglichst einfach und möglichst wenig angreifbar überwachen zu können. Konkret kann ein Hardwareblock zur Realisierung der Authentifizierungsbaugruppe auf Senden (TX) oder Empfangen (RX) konfiguriert werden, oder es kann vorgesehen sein, dass eine RX-Teilgruppe und eine TX-Teilgruppe zum gleichzeitigen Senden/Empfangen vorhanden sind.

Durch das erfindungsgemäß vorgeschlagene Vorgehen wird das fest installierte System der Gesamtvorrichtung, die die wenigstens zwei Datenverarbeitungseinrichtungen enthält, mithin auf Datenmanipulationen/Datenaustausch auf den ersten Kommunikationsverbindungen zwischen den Datenverarbeitungseinrichtungen, die hierfür vorgesehen sind, überwacht. Sollte der Vergleich der Antwortdaten fehlschlagen, existieren eine Vielzahl von Reaktionsmöglichkeiten innerhalb der Gesamtvorrichtung, beispielsweise eine Ausgabe von Warnhinweisen, ein Deaktivieren von Datenverarbeitungseinrichtungen und dergleichen. Die Datenmanipulation/der Datenaustausch innerhalb von Gesamtvorrichtungen wird im Rahmen der vorliegenden Erfindung detektiert und somit in erfolgreicher Art und Weise verhindert oder zumindest erschwert. So kann mithin die Datenqualität der Nutzdaten sichergestellt werden.

Dabei ist ein wesentlicher Vorteil des erfindungsgemäßen Vorgehens dessen Selektivität und Skalierbarkeit. Liegen in einer Gesamtvorrichtung eine Vielzahl von Datenverarbeitungseinrichtungen vor, die Nutzdaten untereinander kommunizieren, muss nicht für jedes Paar dieser Datenverarbeitungseinrichtungen zwangsläufig eine Authentifizierung erfolgen, sondern die Authentifizierung kann auf bestimmte Datentransportstrecken eingeschränkt werden, indem lediglich an die entsprechenden ersten Schnittstelleneinheiten der entsprechenden Datenverarbeitungseinrichtungen Anfragen gesendet werden. Im Fall der bereits angesprochenen Verschlüsselung müssen entsprechende Verschlüsselungsmittel und Verschlüsselungsmaßnahmen nur bei zu überprüfenden Datenverarbeitungseinrichtungen bereitgestellt werden. Beispielsweise bei Kraftfahrzeugen als Gesamtvorrichtungen kann ein Hersteller die Qualität, die Automotive-Tauglichkeit und ein spezielles "Look and feel" bei Displays und/oder sonstigen Nutzdaten sicherstellen.

Es sei an dieser Stelle noch angemerkt, dass es die vorliegende Erfindung problemlos erlaubt, dennoch weitere Nutzdatenquellen hinzuzufügen, wenn diese entsprechend in das Gesamtsystem eingebunden werden. Durch entsprechende Konfigurierung der Authentifizierungseinheit sind eine Vielzahl von Freiheiten in der konkreten Umsetzung und in zulässigen, umschaltbaren Nutzdatenströmen gegeben. Beispielsweise können Konfigurationen gewählt werden, in denen eine spezielle Anzeigevorrichtung/Displayvorrichtung als Datenverarbeitungseinrichtung für eine bestimmte Zeit andere Inhalte anzeigt, es kann das Anzeigen bestimmter Inhalte nur in Kraftfahrzeugen einer bestimmten Klasse zugelassen werden, während andere Kraftfahrzeuge ausgeschlossen werden können und es kann Zusatz-Datenverarbeitungseinrichtungen, die nicht standardmäßig in Kraftfahrzeugen vorgesehen sind, erlaubt werden, Nutzdaten einzuspielen, beispielsweise für als Einsatzfahrzeuge auszugestaltende Kraftfahrzeuge als Gesamtvorrichtungen und dergleichen. Insbesondere im Hinblick auf die besonders bevorzugt vorgesehene Verschlüsselung auf der zweiten Kommunikationsverbindung ist dabei nochmals die Trennung zwischen der Verschlüsselung (zweite Schnittstelleneinheit) und der Umsetzung des Abfragesignals (erste Schnittstelleneinheit) hervorzuheben. Verschlüsselungsstrukturen und gegebenenfalls benötigte Schlüssel werden also außerhalb der ersten Schnittstelleneinheit vorgesehen, müssen mithin nur bei Datenverarbeitungseinrichtungen hinzugefügt werden, die an der Authentifizierung tatsächlich teilnehmen sollen, wobei in diesem Fall die Skalierbarkeit über geteilte, Gruppen zugeordnete Schlüssel definiert werden kann, die unabhängig von den ersten Schnittstelleneinheiten vorgesehen werden.

Wie bereits erwähnt, lässt sich die vorliegende Erfindung insbesondere für die Authentifizierung von Bilddaten, insbesondere Videodaten, als Nutzdaten einsetzen, so dass in zweckmäßiger Ausgestaltung eine der Datenverarbeitungseinrichtungen ein Steuergerät und eine weitere Datenverarbeitungseinrichtungt eine Anzeigevorrichtung ist, wobei als Nutzdaten auf der Anzeigevorrichtung anzuzeigende Bilddaten verwendet werden. Bei Bilddaten ist es bekannt und auch im Rahmen der vorliegenden Erfindung zweckmäßig, Framebeginnanzeiger zu verwenden, so dass mithin die Bilddaten durch Framebeginnanzeiger getrennte Nutzdatenblöcke oder durch Framebeginnanzeiger getrennte, wenigstens einen Nutzdatenblock enthaltende Nutzdatenstrukturen aufweisen können. Dies ermöglicht die einfache Unterscheidung von Nutzdatenblöcken und stellt mithin auch eine Grundlage für deren Identifizieren dar, worauf im Folgenden noch näher eingegangen werden soll.

Als Übertragungsstandard der ersten Kommunikationsverbindung kann LVDS verwendet werden. In diesem Kontext können die ersten Schnittstelleneinheiten beispielsweise als LVDS-Chips ausgebildet sein, die um die entsprechende Authentifizierungsbaugruppe ergänzt sind. Bei Low Voltage Differential Signaling (LVDS) handelt es sich um einen Schnittstellenstandard für Hochgeschwindigkeitsdatenübertragung, der häufig für Videoschnittstellen eingesetzt wird.

Auch allgemein kann zweckmäßig vorgesehen sein, dass die ersten Schnittstelleneinheiten als Mikrochips und die Authentifizierungsbaugruppen als integrierte Schaltungen auf den Mikrochips realisiert sind. Die Authentifizierungsbaugruppen sind also in die Mikrochips integriert, mithin als Funktionseinheit mit den entsprechenden anderen Funktionseinheiten auf einem gemeinsamen Die realisiert. Alternativ zu Microchips können auch FPGAs und/oder ASICs verwendet werden. Dabei ist eine einfach zu realisierende Modifikation im Vergleich zu Verschlüsselungsmaßnahmen gegeben.

Eine zweckmäßige konkrete Ausgestaltung der vorliegenden Erfindung sieht vor, dass die Authentifizierungsbaugruppen einen zyklisch zurückgesetzten Zähler für die Nutzdatenblöcke aufweisen, wobei sich die Anfrage auf eine bei einem Zählerdurchlauf entstehende Gruppe von Nutzdatenblöcken bezieht und zur Identifizierung der Nutzdatenblöcke deren Zahl innerhalb der Gruppe verwendet wird. Während es also zum einen bereits zweckmäßig ist, einen Zähler in der Authentifizierungsbaugruppe für die Dateneinheiten innerhalb eines Nutzdatenblocks vorliegen zu haben, um die Anfragen korrekt beantworten zu können, sieht eine bevorzugte zweckmäßige Weiterbildung vor, auch Nutzdatenblöcke zu zählen und somit zu innerhalb von Zählerdurchläufen = Zyklen entstehende Gruppen aus klar identifizierbaren Nutzdatenblöcken zu schaffen. Auf diese Weise entsteht für jeden Zählerdurchlauf letztlich ein Zeitfenster, innerhalb dessen ein Authentifizierungsvorgang auf die hier beschriebene Art ablaufen kann. Werden beispielsweise bei Bilddaten, konkret Videodaten, Frames betrachtet und beispielsweise 512 Frames als Nutzdatenblöcke zu einer Gruppe von Nutzdatenblöcken, die durchnummeriert wird, zusammengefasst, können sich Zeitfenster im Bereich von Sekunden ergeben. Dies erweist sich insbesondere dann als zweckmäßig, wenn die Datenübertragung über die zweite Kommunikationsverbindung langsamer erfolgt bzw. zusätzlich auch verschlüsselt, da dann ein Zeitpuffer entsteht, der die rechtzeitige Übertragung der Anfrage über die zweite Kommunikationsverbindung sicherstellt. Bei zu einer Nutzdatenstruktur zusammengefassten Nutzdatenblöcken für verschiedene Datenverarbeitungseinrichtungen kann es seitens der sendenden Datenverarbeitungseinrichtung ausreichend sein, die Nutzdatenstrukturen (die auch entsprechend trennbar sein können, beispielsweise durch einen Superframebeginnanzeiger) zu zählen, da dann jeder darin enthaltene Nutzdatenblock automatisch mitnummeriert wird.

So sieht eine besonders vorteilhafte, konkrete Ausgestaltung vor, dass die Anfrage zu Beginn eines neuen Zählerdurchlaufs versendet wird, wobei der Bereich möglicher abzufragender Nutzdatenblöcke zu Beginn der Gruppe derart eingeschränkt wird, dass die Anfrage die Authentifizierungsbaugruppe vor dem Erreichen der ersten abfragbaren Blockzahl erreicht, und/oder der Bereich möglicher abzufragender Nutzdatenblöcke zu Ende der Gruppe derart eingeschränkt wird, dass die Antwortdaten die Authentifizierungseinheit vor dem Beginn eines neuen Zählerdurchlaufs erreichen. Nachdem die Zeiten für das Zusammenstellen von Anfragen, gegebenenfalls das Verschlüsseln von Anfragen und das Übertragen der Anfragen an die ersten Schnittstelleneinheiten bekannt oder zumindest ermittelbar sind, lassen sich die Anfragen gezielt so gestalten, dass innerhalb eines Zählerdurchlaufs immer ein Authentifizierungsvorgang sicher stattfinden kann und die Anfragen beantwortet sowie die Antworten erhalten werden können. Läuft beispielsweise der Zähler von 0 bis 511, was beispielsweise einer Zeitdauer von etwa 8 Sekunden entsprechen kann, ist es denkbar, die zufällig gewählten Blockzahlen abzufragender Nutzdatenblöcke lediglich zwischen 64 bis 447 zu wählen, so dass zum einen die Abfrage rechtzeitig zu der entfernteren ersten Schnittstelleneinheit gelangt und zum anderen auch die Antwortdaten rechtzeitig an die Authentifizierungseinheit zurückgelangen.

Dabei sei noch angemerkt, dass es zum einen denkbar ist, dass die Authentifizierungseinheit, je nachdem, wo sie verbaut ist, selbst die Zeitpunkte kennt, zu denen ein neuer Zählerdurchlauf beginnt, was auch anhand eines entsprechenden Signals von der Authentifizierungsbaugruppe an die Authentifizierungseinheit realisiert werden kann. Jedoch können auch andere Synchronisierungsmechanismen eingesetzt werden, um eine zeitliche Übereinstimmung des Aussendens der Anfragen mit dem Beginn eines Zählerdurchlaufs zu erreichen. Beispielsweise kann eine erste Testanfrage ausgesendet werden und beobachtet werden, wann die entsprechenden Antwortsignale eingehen. Trifft die Testanfrage die ersten Schnittstelleneinheiten in unterschiedlichen Zyklen, werden die Antwortsignale um einen Zyklus versetzt eintreffen, wobei mit dem Eintreffen des zeitlich späteren Antwortsignals auf den nun vorliegenden Start eines aktuellen Zyklus geschlossen werden kann. Die ersten Antwortdaten können dann verworfen werden, nachdem dann die Synchronisation erreicht ist.

Häufig weisen Nutzdatenblöcke Bereiche für Zusatzinformationen auf, die also von tatsächlich zu verwendenden Nutzdaten frei sind, oder Nutzdatenstrukturen, beispielsweise Superframes, strukturell nutzdatenfreie Bereiche. Diese Bereiche können im Rahmen einer weiteren Fortbildung der vorliegenden Erfindung genutzt werden, indem Identifizierungsdaten, beispielsweise eine laufende Nummer/Blockzahl eines Zählers, seitens der ersten Schnittstelleneinheit einer sendenden Datenverarbeitungseinrichtung in Freibereiche der Nutzdaten eines Nutzdatenblocks (oder auch einer Nutzdatenstruktur) geschrieben werden. Das bedeutet also, seitens der Authentifizierungsbaugruppe kann ein Nutzdatenblock auch mit Identifizierungsdaten versehen werden, die seitens der ersten Schnittstelleneinheit der empfangenden Datenverarbeitungseinrichtung genutzt werden können, um den Nutzdatenblock korrekt zu identifizieren. Insbesondere können die Identifizierungsdaten die vom Zähler ermittelte Blockzahl des Nutzdatenblocks enthalten. Freibereiche eines Nutzdatenblocks können beispielsweise sogenannte "Blanklines" bei Frames/Videodaten sein. Werden, worauf im Folgenden noch näher eingegangen werden wird, Bilddaten oder allgemeine Nutzdaten für mehrere empfangende Datenverarbeitungseinrichtungen in einer gemeinsamen Nutzdatenstruktur zusammengefasst, beispielsweise einem sogenannten "Superframe", können auch hierbei Freiräume bzw. Freibereiche entstehen, die zum Einspeichern weiterer Informationen genutzt werden können. Zwar ist es, insbesondere bei serieller Übertragung der Nutzdatenblöcke, denkbar, einfach auf beiden Seiten der ersten Kommunikationsverbindung zu zählen und somit übereinstimmende Nutzdatenblöcke aufzufinden, jedoch könnte dann ein Übertragungsfehler zu einer "Desynchronisierung" der jeweiligen Zähler führen, was in Authentifizierungsfehlschlägen resultieren kann. Daher stellt die Mitübersendung von von der Authentifizierungsbaugruppe selbst ermittelten Identifizierungsdaten eine deutliche Verbesserung der Robustheit und Verlässlichkeit der hier beschriebenen Authentifizierung dar.

Wie bereits angedeutet wurde, sieht eine besonders bevorzugte Weiterbildung der vorliegenden Erfindung vor, dass die Übertragung der Anfrage zwischen den zweiten Schnittstelleneinheiten mittels eines in diesen abgelegten Schlüssels verschlüsselt erfolgt. Auf diese Weise wird vermieden, dass die Anfrage auf der zumindest für eine Datenverarbeitungseinrichtung zu nutzenden zweiten Kommunikationsverbindung abgehört und entsprechend bei Kenntnis der Nutzdaten beantwortet werden kann. Dabei ist, wie bereits erwähnt, die Möglichkeit zur Reaktion auf eine Anfrage, welche günstig realisierbar ist, mit der Authentifizierungsbaugruppe klar getrennt von den Verschlüsselungsmitteln, die insbesondere in der zweiten Schnittstelleneinheit vorzusehen sind. Auf diese Weise kann aufwandsarm die grundsätzliche Möglichkeit zur Beantwortung von Anfragen durch entsprechende Modifikation der ersten Schnittstelleneinheit geschaffen werden, während die aufwändigen Verschlüsselungsmittel nur seitens der Datenverarbeitungseinrichtungen vorgesehen werden müssen, für die eine Authentifizierung erfolgen soll. Dies verbessert, wie bereits dargelegt, die Skalierbarkeit des Authentifizierungssystems.

Nachdem es zumindest nicht gänzlich unmöglich ist, ein Abfangen von Anfragen innerhalb einer Datenverarbeitungseinrichtung vorzunehmen, kann eine zweckmäßige Weiterbildung vorsehen, dass mehrere jeweils wenigstens zwei Datenverarbeitungseinrichtungen aufweisende Gesamtvorrichtungen betrieben werden, wobei für jede Gesamtvorrichtung ein unterschiedlicher Schlüssel gewählt wird. Beispielsweise kann bei Kraftfahrzeugen als Gesamtvorrichtungen ein kraftfahrzeugindividueller Schlüssel vorgesehen werden, der eine Manipulation nochmals deutlich erschwert.

Gesamtvorrichtungen, beispielsweise Kraftfahrzeuge, werden meist eine größere Zahl als zwei Datenverarbeitungseinrichtungen aufweisen, wobei nicht für jede Kombination von sendender Datenverarbeitungseinrichtung und empfangender Datenverarbeitungseinrichtung eine Authentifizierung notwendig ist. Zudem können die Datenverarbeitungseinrichtungen in verschiedenen Topologien, insbesondere was die erste Kommunikationsverbindung angeht, verbunden sein, so dass es durchaus denkbar ist, seitens einer sendenden Datenverarbeitungseinrichtung Nutzdaten für mehrere empfangende Datenverarbeitungseinrichtungen gemeinsam über eine erste Schnittstelleneinheit und somit eine erste Kommunikationsverbindung auszusenden. Insbesondere sind mithin auch Sterntopologien denkbar. Dabei kann der hier beschriebene Authentifizierungsvorgang, der ohnehin bevorzugt wiederholt, insbesondere zyklisch, durchgeführt wird, für beliebige Kombinationen von sendender und empfangender Datenverarbeitungseinrichtung eingesetzt werden, wobei lediglich gelten muss, dass zwischen diesen eine erste Kommunikationsverbindung (gegebenenfalls auch über wenigstens eine weitere Datenverarbeitungseinrichtung) und eine zweite Kommunikationsverbindung vorliegt, über die die Anfragen, bevorzugt verschlüsselt, verschickt werden können. Gerade dann jedoch, wenn in Reihe geschaltete Datenverarbeitungseinrichtungen vorliegen und die Nutzdaten entlang der Reihe von der sendenden Datenverarbeitungseinrichtung gemeinsam ausgesendet werden, können sich einige spezielle Konstellationen ergeben, die im Folgenden im Kontext der Erfindung angesprochen werden sollen.

So kann vorgesehen sein, dass durch eine sendende der Datenverarbeitungseinrichtungen Nutzdaten an mehrere empfangende Datenverarbeitungseinrichtungen über eine gemeinsame erste Schnittstelleneinheit gesendet werden, wobei der Datentransport zu einem zu überprüfenden Teil der empfangenden Datenverarbeitungseinrichtungen jeweils getrennt überprüft wird. Das bedeutet, der Datentransport zu bestimmten empfangenden Datenverarbeitungseinrichtungen kann jeweils getrennt überprüft werden, wobei insbesondere auch der Datentransport zu bestimmten empfangenden Datenverarbeitungseinrichtungen, wie bereits diskutiert, von der Überprüfung/Authentifizierung ausgenommen werden kann.

Eine Weiterbildung sieht vor, dass Nutzdatenblöcke für unterschiedliche Datenverarbeitungseinrichtungen gemeinsam in einer von der sendenden Datenverarbeitungseinrichtung auszugebenden Nutzdatenstruktur gesendet werden, wobei sich Anfragen an erste Schnittstelleinheiten empfangender Datenverarbeitungseinrichtungen auf die dieser Datenverarbeitungseinrichtung zuzuordnenden Nutzdatenblöcke beziehen. Beispielsweise bei Bilddaten, die auf mehreren Displayvorrichtungen als empfangende Datenverarbeitungseinrichtungen dargestellt werden sollen, können deren jeweilige Nutzdatenblöcke (Frames) zu einer Nutzdatenstruktur zusammengefasst werden, die als "Superframe" bezeichnet werden kann. Jede der empfangenden Datenverarbeitungseinrichtungen kann dann ihren entsprechenden Nutzdatenblock sozusagen aus der Nutzdatenstruktur entnehmen. Nachdem der Datentransport zu bestimmten Datenverarbeitungseinrichtungen überprüft werden soll, mithin, ob deren Nutzdaten unmanipuliert bzw. überhaupt ankommen, sind von den Anfragen zweckmäßigerweise immer die an die empfangende Datenverarbeitungseinrichtung gerichteten Nutzdatenblöcke betroffen, zu der der Datentransport überprüft werden soll.

Dabei kann eine Ausgestaltung auch vorsehen, dass die Nutzdatenstruktur durch Entnahme jeweiliger Nutzdatenblöcke in den zugeordneten Datenverarbeitungseinrichtungen reduziert wird, um beispielsweise Bandbreite einzusparen. In diesem Zusammenhang kann sich die Art des Zählens, um die korrekten Dateneinheiten abzufragen, verändern. Im Rahmen der vorliegenden Erfindung ist es nun bevorzugt, dass die Authentifizierungseinheit die Veränderung der Nutzdatenstruktur auf dem Übertragungsweg genau wie die Art der Einpflegung der Nutzdatenblöcke in die Nutzdatenstruktur kennt und nutzt, um die Anfragen von vornherein so zu formulieren, dass sie in den entsprechenden Authentifizierungsbaugruppen der empfangenden Datenverarbeitungseinrichtungen zu den korrekten Ergebnissen führen, insbesondere dann, wenn sich die Nutzdatenstruktur auf dem Weg zu der Datenverarbeitungseinrichtung verändert hat. Vorzugsweise kann also vorgesehen sein, dass, insbesondere bei einer Reduzierung der Nutzdatenstruktur durch Entnahme jeweiliger Nutzdatenblöcke in den zugeordneten Datenverarbeitungseinrichtungen, die Anfrage unter Berücksichtigung einer eine Veränderung der Nutzdatenstruktur auf dem Übertragungsweg und/oder die Einpflegung der Nutzdatenblöcke in die Nutzdatenstruktur beschreibenden Nutzdatenstrukturinformation in der Authentifizierungseinheit formuliert wird. Auf diese Art und Weise wird beispielsweise berücksichtigt, dass bei Empfang in einer empfangenden Datenverarbeitungseinrichtung eine abzufragende Dateneinheit, die sich zunächst an einer bestimmten ersten Position innerhalb der Nutzdatenstruktur befand, nun an einer anderen, zweiten Position innerhalb des, beispielsweise verbliebenen, empfangenden Anteils der Nutzdatenstruktur befindlich ist, die gegebenenfalls auch nur auf den Nutzdatenblock der empfangenden Datenverarbeitungseinrichtung reduziert ist.

In einer alternativen Ausgestaltung zu einer derartigen seriellen Versendung von Nutzdatenblöcken, deren Beginn klar feststellbar ist, ist auch eine paketbasierte Übertragung der Nutzdaten über die erste Kommunikationsverbindung denkbar. So kann vorgesehen sein, dass als Nutzdatenblöcke eigene, an die jeweiligen Datenverarbeitungseinheiten gerichtete, identifizierbare Nutzdatenpakete verwendet werden. Derartige Nutzdatenpakete weisen meist ohnehin bereits einen Header auf, in dem eine Identifikationsinformation bezüglich des Nutzdatenpakets abgelegt ist. Diese Identifizierungsdaten, die ohnehin vorhanden sind, können selbstverständlich auch erfindungsgemäß genutzt werden, beispielsweise, indem auf einen Zähler in der Authentifizierungsbaugruppe verzichtet werden kann oder dessen Inhalt dort einbeschrieben werden kann.

In jedem Fall ist es zweckmäßig, wenn bei der Verwendung eines Zählers in der Authentifizierungsbaugruppe Nutzdatenpakete für unterschiedliche Datenverarbeitungseinheiten jeweils getrennt gezählt werden und/oder eine Zählernummer (Blockzahl) in einen Header des Nutzdatenpakets eingespeichert wird. Soll mithin ein Zähler verwendet werden, wird vorgeschlagen, für jede empfangende Datenverarbeitungseinrichtung und die entsprechenden zugeordneten Nutzdatenpakete einen eigenen Zähler zu verwenden. Mit diesem Ansatz ist es möglich, auch Wiederholungen und Vertauschungen von Nutzdatenpaketen handzuhaben.

Bei einer in der Authentifizierungseinheit nicht bekannten Veränderung der Nutzdatenstruktur in wenigstens einer zwischen der ursprünglich sendenden Datenverarbeitungseinrichtung und der letztlich empfangenden Datenverarbeitungseinrichtung liegenden Datenverarbeitungseinrichtung kann vorgesehen sein, dass jede Teilstrecke einzeln anhand entsprechender Anfragen überprüft wird. In diesem Fall kann die Anfrage nicht sinnvoll für die letztlich empfangende Datenverarbeitungseinrichtung formuliert werden, da die entsprechende Information in der Authentifizierungseinheit nicht vorliegt, so dass vorgeschlagen wird, den Datentransport über jede Teilstrecke zwischen der ursprünglich sendenden Datenverarbeitungseinrichtung und der letztlich empfangenden Datenverarbeitungseinrichtung getrennt zu überprüfen, was jedoch weniger bevorzugt ist, da dann, insbesondere in der Ausgestaltung mit einer Verschlüsselung über die zweite Kommunikationsverbindung, weitere Verschlüsselungsmittel benötigt werden, die Aufwand und Kosten mit sich bringen können. Daher sind im Rahmen der vorliegenden Erfindung Ausführungsbeispiele bevorzugt, bei denen die Authentifizierungseinheit in Form einer Nutzdatenstrukturinformation weiß, in welcher Form die Nutzdaten von welcher Datenverarbeitungseinrichtung empfangen werden.

Es sei an dieser Stelle noch angemerkt, dass es auch denkbar ist, die erste Kommunikationsverbindung bidirektional zu nutzen. Dann sind, wenn eine Authentifizierung des gleichzeitig erfolgenden Datentransports in beide Richtungen erfolgen soll, zwei logische Instanzen der Authentifizierungsbaugruppe erforderlich. Je nach der Ausgestaltung der ersten Schnittstelleneinheiten können die entsprechenden Authentifizierungsbaugruppen einfach oder zweifach, beispielsweise zwei gleiche Teilgruppen im RX-Pfad und im TX-Pfad, vorzusehen sein.

Vorzugsweise wird eine in einem Netzwerk ausgebildete zweite Kommunikationsverbindung verwendet. Beispielsweise in Kraftfahrzeugen als Gesamtvorrichtungen sind meistens ohnehin Kommunikationsnetzwerke vorhanden, beispielsweise als CAN-Busse, die verschiedene Datenverarbeitungseinheiten verbinden. Diese Netzwerke können nun im Rahmen der vorliegenden Erfindung genutzt werden, um die zweite Kommunikationsverbindung herzustellen, die es ermöglicht, die Anfragen allen betroffenen Datenverarbeitungseinrichtungen zukommen zu lassen.

In einer zweckmäßigen Ausgestaltung kann die Authentifizierungseinheit in wenigstens eine zweite Schnittstelleneinheit integriert sein. Insbesondere dann, wenn eine verschlüsselte Übertragung von Anfragen über die zweite Kommunikationsverbindung stattfindet, handelt es sich bei der Authentifizierungseinheit um eine Mastereinheit, wobei entsprechende Slaveeinheiten in Anfragen empfangenden Datenverarbeitungseinrichtungen, insbesondere deren zweiten Schnittstelleneinheiten, vorgesehen sein können. Diese leiten die entschlüsselte Anfrage intern in der empfangenden Datenverarbeitungseinrichtung an die erste Schnittstelleneinheit, konkret die Authentifizierungsbaugruppe, weiter.

Wenn zyklisch authentifiziert wird, beispielsweise während jedes der genannten Fehlerdurchläufe und/oder jedes n-ten der genannten Zählerdurchläufe, kann vorgesehen sein, dass eine fehlgeschlagene Authentifizierung bzw. Überprüfung erst dann festgestellt wird, wenn ein bestimmter Anteil an fehlerhaften Vergleichen über mehrere Authentifizierungsvorgänge vorliegt. Es sind unterschiedliche Maßnahmen bei Fehlschlagen der Überprüfung, mithin bei Feststellen eines Authentifizierungsfehlers, denkbar, beispielsweise die Ausgabe von entsprechenden Meldungen an einen Benutzer, die Deaktivierung empfangender Datenverarbeitungseinrichtungen und dergleichen. In einer Ausgestaltung ist es denkbar, bei einem festgestellten Authentifizierungsfehler Anfragen an die entsprechende empfangende Datenverarbeitungseinrichtung zu unterlassen. Das Ausbleiben dieser Anfragen kann seitens der empfangenden Datenverarbeitungseinrichtung als Hinweis auf den Authentifizierungsfehler aufgefasst werden, so dass auch dort entsprechende Maßnahmen, beispielsweise eine Deaktivierung und/oder Ausgabe von Hinweisen, stattfinden kann.

Wie bereits erwähnt, lässt sich die vorliegende Erfindung besonders vorteilhaft in einem Kraftfahrzeug als Gesamtvorrichtung einsetzen, wobei dann vorgesehen sein kann, dass eine insbesondere sendende Datenverarbeitungseinrichtung ein Steuergerät eines Kraftfahrzeugs als Gesamtvorrichtung und eine insbesondere empfangende Datenverarbeitungseinrichtung einer Anzeigevorrichtung, insbesondere eine Displayvorrichtung, des Kraftfahrzeugs ist.

Entsprechend betrifft die vorliegende Erfindung neben dem Verfahren auch ein Kraftfahrzeug, aufweisend wenigstens zwei Datenverarbeitungseinrichtungen, zwischen denen eine durch jeweilige erste Schnittstelleneinheiten der Datenverarbeitungseinrichtungen bereitgestellte erste Kommunikationsverbindung zum Datentransport von Nutzdaten und eine durch jeweilige zweite Schnittstelleneinheiten der Datenverarbeitungseinrichtungen bereitgestellte zweite Kommunikationsverbindung bestehen, wobei die zu übertragenden Nutzdaten in Nutzdatenblöcke aufteilbar sind, welches sich dadurch auszeichnet, dass ferner eine Authentifizierungseinheit, die zur Realisierung einer Challenge-Response-Authentifizierung als Challenge eine Abfragen zufällig gewählter Dateneinheiten aus identifizierbaren, zufällig gewählten Nutzdatenblöcken der Nutzdaten, wobei die abgefragten Nutzdaten Antwortdaten bilden, fordernde Anfrage unter Nutzung der zweiten Kommunikationsverbindung an die ersten Schnittstelleneinheiten sendet, und jeweils eine Authentifizierungsbaugruppe der jeweiligen ersten Schnittstelleneinheiten, die die angeforderten Antwortdaten aus den Nutzdaten extrahiert und an die Authentifizierungseinheit rückübermittelt, vorgesehen sind, wobei durch die Authentifizierungseinheit eine erfolgreiche Überprüfung bei Übereinstimmung der Antwortdaten der jeweiligen Authentifizierungsbaugruppen festgestellt wird. Mit anderen Worten ist das erfindungsgemäße Kraftfahrzeug als Gesamtvorrichtung mithin zur Durchführung des erfindungsgemäßen Verfahrens ausgebildet. Sämtliche Ausführungen zum erfindungsgemäßen Verfahren lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine erste, einfache Ausgestaltung einer Gesamtvorrichtung,
- Fig. 2: einen Ablaufplan eines Ausführungsbeispiels des erfindungsgemäßen Verfahrens,
- Fig. 3: eine zweite Ausgestaltung einer Gesamtvorrichtung,
- Fig. 4: eine dritte Ausgestaltung einer Gesamtvorrichtung, und
- Fig. 5: ein erfindungsgemäßes Kraftfahrzeug.

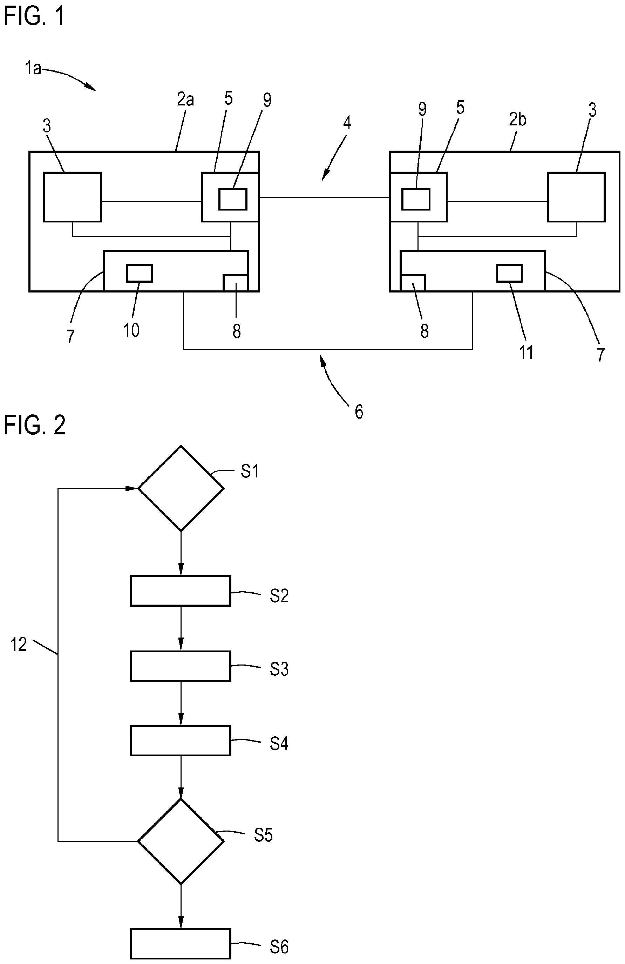

Fig. 1 zeigt eine erste, besonders einfache Konfiguration einer Gesamtvorrichtung 1a, die in diesem Fall zwei näher zu betrachtende Datenverarbeitungseinrichtungen 2a, 2b aufweist. Die Datenverarbeitungseinrichtungen 2a, 2b weisen jeweils eine Datenverarbeitungseinheit 3 auf, auf die hier nicht näher eingegangen werden soll. In diesem Ausführungsbeispiel handelt es sich bei der Datenverarbeitungseinrichtung 2a um ein Steuergerät, bei der Datenverarbeitungseinrichtung 2b um eine Anzeigevorrichtung, konkret eine Displayvorrichtung. Von der Datenverarbeitungseinrichtung 2a ermittele Bilddaten, hier Videodaten, sollen auf einem Display der Anzeigevorrichtung 2b dargestellt werden, so dass als Nutzdaten Bilddaten über eine erste Kommunikationsverbindung 4, hier eine LVDS-Verbindung, von der sendenden Datenverarbeitungseinrichtung 2a an die empfangende Datenverarbeitungseinrichtung 2b übertragen werden soll. Die Datenverarbeitungseinrichtungen 2a, 2b weisen hierzu gleich ausgebildete erste Schnittstelleneinheiten 5 auf, die vorliegend als LVDS-Chips ausgebildet sind.

Zwischen den Datenverarbeitungseinrichtungen 2a, 2b liegt vorliegend noch eine weitere, zweite Kommunikationsverbindung 6 vor, die als CAN-Busverbindung Teil eines Netzwerks darstellen kann. Zweite Schnittstelleneinheiten 7 erlauben die Datenkommunikation über die zweite Kommunikationsverbindung 6. Die zweiten Schnittstelleneinheiten 7 sind dabei als grundsätzlich bekannte Netzwerk-Input-Output-Controller ausgebildet. Umfasst beispielsweise die Datenverarbeitungseinrichtung 2b einen Touchscreen, können entsprechende, diesen betreffende Bediendaten über die zweite Kommunikationsverbindung 6 an die Datenverarbeitungseinrichtung 2a übertragen werden.

Um eine verschlüsselte Übertragung von Informationen über die zweite Kommunikationsverbindung 6 zu erlauben, weisen die zweiten Schnittstelleneinheiten 7 entsprechende Verschlüsselungsmittel auf, die hier über dem Schlüssel 8 angedeutet sind.

Um eine aufwandsarme Authentifizierung des Datentransports über die erste Kommunikationsverbindung 4 von der Datenverarbeitungseinrichtung 2a zu der Datenverarbeitungseinrichtung 2b zu realisieren, sind nun die ersten Schnittstelleneinheiten 5 durch Hinzufügung einer Authentifizierungsbaugruppe 9 modifiziert, die in den LVDS-Chip integriert ist. Ferner ist seitens der Datenverarbeitungseinrichtung 2a eine als Mastereinheit ausgebildete Authentifizierungseinheit 10 in die zweite Schnittstelleneinheit 7 integriert, während die zweite Schnittstelleneinheit 7 der Datenverarbeitungseinrichtung 2b eine entsprechende Slaveeinheit 11 aufweist.

Die konkrete Durchführung eines Authentifizierungsvorgangs wird im Folgenden im Hinblick auf Fig. 2 näher erläutert. Dabei ist vorweg festzuhalten, dass die Nutzdaten über die erste Kommunikationsverbindung 4 als Nutzdatenblöcke bildende Frames übertragen werden, wobei der Beginn eines neuen Frames jeweils durch einen Framebeginnanzeiger gekennzeichnet und durch die erste Schnittstelleneinheit 5 und somit die Authentifizierungsbaugruppe 9 erkennbar ist.

Die Authentifizierungsbaugruppen 9 weisen jeweils Zähler (nicht dargestellt) auf, die zyklisch einen Zählbereich, beispielsweise von 0 bis 511, durchlaufen und die einzelnen Frames als Nutzdatenblöcke durchnummerieren. Weitere Zähler in der Authentifizierungsbaugruppe 9 sind in der Lage, bestimmte Dateneinheiten, beispielsweise Bildwerte bestimmter Pixel, auszulesen, indem auch die Dateneinheiten innerhalb der Nutzdatenblöcke gezählt werden können. Eine seitens einer sendenden Datenverarbeitungseinrichtung, hier der Datenverarbeitungseinrichtung 2a, durch den Zähler vergebene Blockzahl, also Nummer des Nutzdatenblockes, wird in eine Leerzeile des jeweiligen Nutzdatenblockes, also Frames, geschrieben, damit die Blockzahl auch seitens der Authentifizierungsbaugruppe 9 der empfangenden Datenverarbeitungseinrichtung 2b zweifelsohne und eindeutig bekannt ist. Die Blockzahl kann mithin als Identifizierungsdaten des jeweiligen Nutzdatenblocks verstanden werden.

Basierend auf diesem Wissen und der grundlegenden Struktur der versendeten Nutzdaten kann mittels der Authentifizierungseinheit 7 der Datentransport von der Datenverarbeitungseinrichtung 2a zu der Datenverarbeitungseinrichtung 2b überprüft werden, mithin überwacht werden, ob seitens der Datenverarbeitungseinrichtung 2b auch tatsächlich die Nutzdaten vorliegen, die ausgesendet wurden.

Hierzu wird in einem Schritt S1, vgl. Fig. 2, überprüft, ob gerade der Beginn eines Zählerdurchlaufs vorliegt. Hierfür kann ein geeigneter Synchronisierungsmechanismus eingesetzt werden. Ist dies der Fall, generiert in einem Schritt S2 die Authentifizierungseinheit 7 als "Challenge" eines Challenge-Response-Verfahrens eine Anfrage, nämlich das Auslesen einer bestimmten Zahl von Dateneinheiten aus einer bestimmten Zahl von Frames, also Nutzdatenblöcken, innerhalb des aktuellen Zählerdurchlaufs. Die Zahl der auszulesenden Dateneinheiten pro Nutzdatenblock und die Zahl der betroffenen Nutzdatenblöcke sind dabei konfigurierbar; je größer ihre Anzahl, desto verlässlicher die Überprüfung, wobei jedoch darauf geachtet werden muss, dass der Aufwand und die durch die Datenübermittlung entstehenden Latenzen nicht zu groß werden. Im vorliegenden Ausführungsbeispiel können beispielsweise acht Nutzdatenblöcke seitens der Authentifizierungseinheit 7 zufällig ausgewählt werden, aus denen wiederum acht zufällig ausgewählte Dateneinheiten (Bildwerte an Pixeln) abgefragt werden. Dabei ist die Nummer der zufällig auszuwählenden Nutzdatenblöcke vorliegend auf ein Unterintervall des jeweiligen Zählerdurchlaufs, im Beispiel 0 bis 511, beschränkt, und zwar derart, dass die Anfrage beide erste Schnittstelleneinheiten 5 rechtzeitig erreicht, trotz der Übertragungswege innerhalb und außerhalb der Datenverarbeitungseinrichtungen 2a, 2b und der stattfindenden Verschlüsselung. Findet das Versenden der 512 Nutzdatenblöcke beispielsweise innerhalb von acht Sekunden statt, kann berechnet werden, wie lange die Übertragung der Anfrage an die ersten Schnittstelleneinheiten 5 maximal dauern kann, so dass sich beispielsweise ein eingeschränkter Bereich zum Auswählen der zufälligen Nutzdatenblöcke zwischen 64 und 447 ergeben kann.

Die Auswahl der Challenge im Schritt S2 muss nicht zwangsläufig nach dem Eintritt des Beginns des Zählerdurchlaufs erfolgen, sondern Schritt S2 kann auch vor dem Schritt S1 liegen. Beispielsweise ist es auch denkbar, eine bestimmte Zahl an Challenges vorabzugenerieren und immer bei Beginn eines neuen Zählerdurchlaufs eine auszusenden. Auf diese Weise kann Zeit nach Beginn des Zählerdurchlaufs gewonnen werden.

Zum Abschluss des Schrittes S2 (bzw. dann, wenn Schritt S2 schon vor Schritt S1 erfolgt ist, zum Abschluss des Schrittes S1) erfolgt dann das Versenden der Anfragen an die Schnittstelleneinheiten 5. Im Beispiel der Fig. 1 wird die Anfrage innerhalb der Datenverarbeitungseinrichtung 2a über eine 12C-Leitung direkt an die erste Schnittstelleneinheit 5 gegeben; zur zweiten Datenverarbeitungseinrichtung 2b wird die Anfrage zunächst mittels des Schlüssels 8 verschlüsselt, über die zweite Kommunikationsverbindung 6 verschickt, in der Slaveeinheit 11 dekodiert und wiederum über eine I2C-Leitung an die erste Schnittstelleneinheit 5 und somit die Authentifizierungsbaugruppe 9 weitergegeben.

Wird die Anfrage von den Authentifizierungsbaugruppen 9 erhalten, wird sie in einem Schritt S3 entsprechend ausgeführt, indem abgewartet wird, bis die genannten Nutzdatenblöcke (Frames) auftauchen, woraufhin die genannten Nutzdateneinheiten aus ihnen abgefragt, als Antwortdaten gesammelt und an die Authentifizierungseinheit 10 zurückübermittelt werden. Dabei findet bei dem Übertragungsweg über die zweite Kommunikationsverbindung 6 (Antwortdaten der Datenverarbeitungseinrichtung 2b) wiederum eine Verschlüsselung statt.

In einem Schritt S4 werden dann die Antwortdaten beider Authentifizierungsbaugruppen 9 verglichen. Stimmen diese überein, ist die Überprüfung positiv, vgl. Schritt S5, und in einem zyklischen Ablauf kann zum nächsten Authentifizierungsvorgang fortgeschritten werden, vgl. Pfeil 12. Schlägt der Vergleich fehl (was auch über mehrere Ausführungsvorgänge überwacht werden kann), wird von Schritt S5 zu Schritt S6 verzweigt, wo geeignete Maßnahmen eingeleitet werden können. Hierbei ist anzumerken, dass eine Maßnahme auch vorsehen kann, Anfragen an die zweite Datenverarbeitungseinrichtung 2b in der Zukunft zu unterdrücken, woraus diese folgern kann, dass die Authentifizierung fehlgeschlagen ist und dort entsprechende Maßnahmen ergriffen werden können.

Die zyklischen Anfragen fungieren dabei als eine Art "Heartbeat", dessen Ausbleiben der empfangenden Datenverarbeitungseinrichtung 2b einen Hinweis gibt, dass die empfangenen Nutzdaten nicht authentisch sind.

Gesamtvorrichtungen weisen, beispielsweise bei einer Ausbildung als Kraftfahrzeug, üblicherweise mehr als zwei Datenverarbeitungseinrichtungen 2a, 2b auf. Hieraus ergeben sich komplexere Topologien, die jedoch auch durch das erfindungsgemäße Verfahren abgegriffen werden können.

So können innerhalb solcher Topologien letztlich verschiedenste Paare von miteinander über die erste Kommunikationsverbindung 4 kommunizierenden Datenverarbeitungseinrichtungen 2a, 2b gebildet werden, zwischen denen der Datentransport parallel oder sequentiell, gesteuert durch die wenigstens eine Authentifizierungseinheit 10, überprüft werden kann.

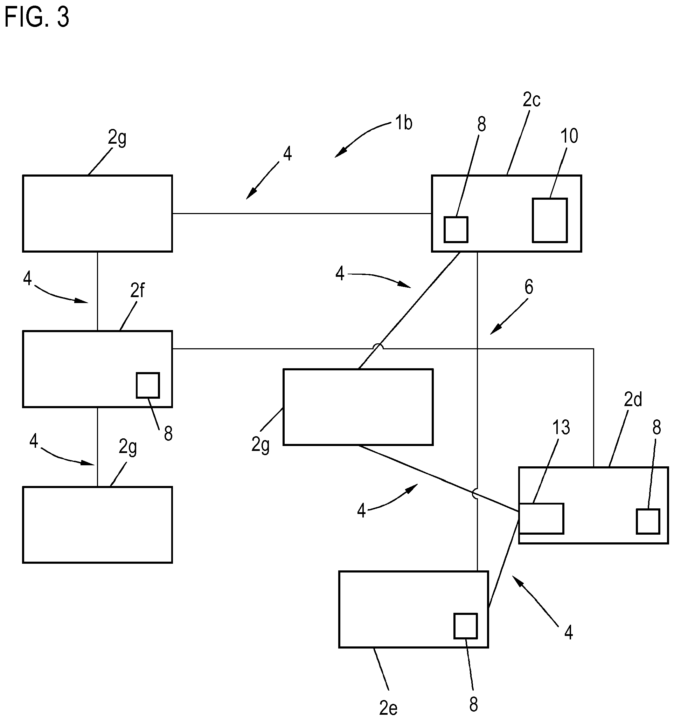

Fig. 3 zeigt ein erstes Beispiel einer möglichen Systemtopologie einer Gesamtvorrichtung 1b. Die Gesamtvorrichtung 1b umfasst vorliegend zwei als Steuergeräte ausgebildete Datenverarbeitungseinrichtungen 2c, 2d, wobei die Datenverarbeitungseinrichtung 2d als zusätzliches Steuergerät hinzugefügt wurde, welches eine zeitweise Bereitstellung von Videodaten als Nutzdaten an die als Displayeinrichtung ausgebildete Datenverarbeitungseinrichtung 2e bieten soll. Damit die Datenverarbeitungseinrichtung 2d in die Authentifizierungsprozesse eingebunden werden kann, ist in ihr der korrekte Schlüssel 8 abgelegt, wobei der Einfachheit halber hier die Schnittstelleneinheiten 5, 7 und die Slaveeinheiten 11 nicht mehr gezeigt sind; die Authentifizierungseinheit 10 ist vorliegend in der zweiten Schnittstelleneinheit 7 der Datenverarbeitungseinrichtung 2c integriert. Damit zwischen der Datenverarbeitungseinrichtung 2c und der Datenverarbeitungseinrichtung 2d als Datenquelle für die Datenverarbeitungseinrichtung 2e umgeschaltet werden kann, weist die Datenverarbeitungseinrichtung 2d eine Umschalteinrichtung 13 (Switch) für die erste Kommunikationsverbindung 4 auf, wobei die Umschalteinrichtung 13 selbstverständlich auch anders verortet werden kann.

Eine weitere Displayeinrichtung, zu der der Datentransport überprüft werden soll, ist die Datenverarbeitungseinrichtung 2f. Die Datenverarbeitungseinrichtungen 2g sind sonstige Anzeigevorrichtungen, für die eine Authentifizierung nicht vorgenommen werden soll. Zwar weisen sie, nachdem alle ersten Schnittstelleneinheiten 5 gleich ausgebildet sein sollen, allesamt die günstig und aufwandsarm zu realisierende Authentifizierungsbaugruppe 9 auf, jedoch sind die deutlich aufwändigeren Verschlüsselungsmittel nicht erforderlich, weshalb dort kein Schlüssel 8 angedeutet ist.

Ausgehend von der Datenverarbeitungseinrichtung 2c als Datenquelle für Nutzdaten ist hinsichtlich der Anzeigevorrichtungen 2e - 2g eine Baumtopologie gegeben. Dabei werden Nutzdaten für die verschiedenen, entlang einer gemeinsamen, durch erste Kommunikationsverbindungen 4 gebildeten Datentransportstrecke liegenden Datenverarbeitungseinrichtungen 2e - 2g zu Nutzdatenstrukturen zusammengefasst, deren Beginn durch die Authentifizierungsbaugruppen klar identifizierbar ist. Dabei können insbesondere sogenannte Superframes verwendet werden, in denen die Nutzdatenblöcke für die einzelnen Datenverarbeitungseinrichtungen 2e - 2g enthalten sind, die entlang derselben Gesamtstrecke liegen. Zur Datenreduzierung können die Datenverarbeitungseinrichtungen 2e - 2g ihre jeweiligen Nutzdatenblöcke aus der Nutzdatenstruktur entfernen, so dass eine Veränderung der Nutzdatenstrukturen auftritt, was wiederum Einfluss auf den Zählerstand zum Abfragen bestimmter Dateneinheiten in Nutzdatenblöcken hat. Diese Veränderungen sind der Authentifizierungseinheit 10 jedoch bekannt, in welcher entsprechend eine Nutzdatenstrukturinformation abgelegt ist, die dies beschreibt. Das bedeutet, die Anfragen können trotz der Veränderung der Nutzdatenstruktur gezielt bereits derart formuliert werden, dass die korrekten Dateneinheiten abgefragt werden.

Die zweite Kommunikationsverbindung 6 verläuft vorliegend über ein Netzwerk, nämlich ein CAN-Bussystem, wie entsprechend angedeutet ist, an das wenigstens die Datenverarbeitungseinrichtungen 2c, 2d, 2e und 2f angeschlossen sind. In vielen Fällen werden auch die Datenverarbeitungseinrichtungen 2g angeschlossen sein, was hier jedoch nicht näher dargestellt ist.

In der Ausgestaltung nach Fig. 3 soll nun durch entsprechende Authentifizierungsvorgänge gemäß Fig. 2 der Datentransport zwischen den Datenverarbeitungseinrichtungen 2c und 2f, 2c und 2e sowie 2d und 2e überprüft werden, wozu entsprechende Anfragen generiert und über die zweite Kommunikationsverbindung 6, entsprechend mit Schlüssel 8 verschlüsselt, versendet werden. Die Authentifizierungsvorgänge können parallel oder seriell erfolgen. Nachdem die Veränderung von Nutzdatenstrukturen der Authentifizierungseinheit 10 bekannt ist, werden die Anfragen unmittelbar korrekt formuliert und können im Fall der Datenverarbeitungseinrichtung 2f, 2d, bei denen entlang der ersten Kommunikationsverbindung 4 eine Datenverarbeitungseinrichtung 2g zwischengeschaltet ist, unmittelbar übersandt werden, ohne dass noch eine Überprüfung hinsichtlich der entsprechenden Datenverarbeitungseinrichtungen 2g stattfinden müsste.

In diesem Ausführungsbeispiel ist die Verwendung unterschiedlicher Schlüssel 8 bzw. Schlüsselgruppen besonders vorteilhaft, insbesondere unterschiedliche Schlüssel für 2c-2f, 2c-2e und 2d-2e. Stammt beispielsweise die Datenverarbeitungseinrichtung 2d von einem externen Lieferanten, muss ein intern verwendeter Schlüssel 8 nicht mit diesem geteilt werden. Insbesondere können lieferantenspezifische Schlüssel 8 vorgesehen werden, um "Leaks" hinsichtlich von Schlüsseln 8 zuordnen zu können.

Auch beispielsweise den Verbindungen 2c-2f und 2c-2e können unterschiedliche Schlüssel 8 zugeordnet sein, beispielsweise unterschiedliche Schlüsselstärken (Kostensteuerung).

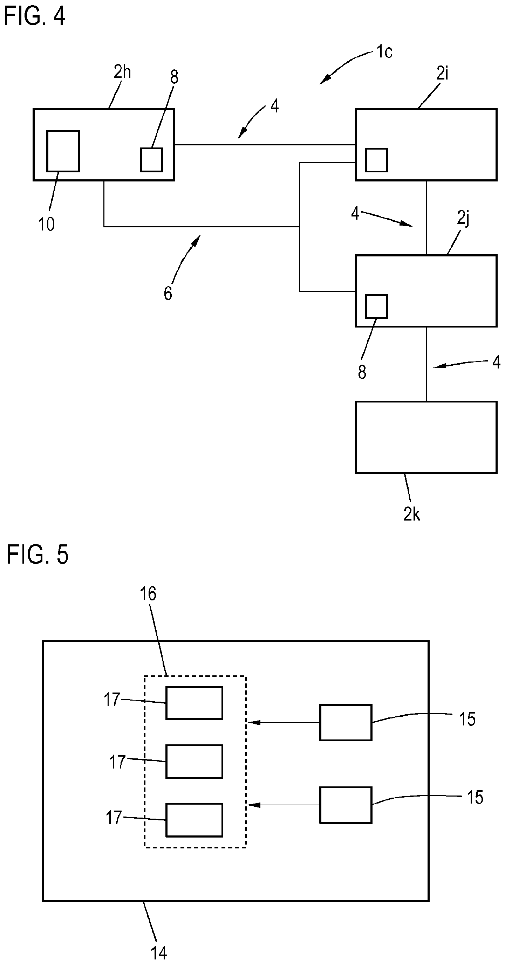

Fig. 4 zeigt einen weniger bevorzugten Fall einer Gesamtvorrichtung 1c, in der der Authentifizierungseinheit 10 in der als Steuergerät ausgebildeten Datenverarbeitungseinrichtung 2h die Veränderung der Nutzdatenstruktur entlang einer drei als Anzeigevorrichtungen ausgebildeten Datenverarbeitungseinrichtungen 2i, 2j, 2k umfassenden Kette nicht bekannt ist, jedoch der Datentransport zur Datenverarbeitungseinrichtung 2j authentifiziert werden soll. Nachdem die Veränderung der Nutzdatenstruktur durch die Datenverarbeitungseinrichtung 2i unbekannt ist, ist hier der Datentransport zwischen der Datenverarbeitungseinrichtung 2h und 2i und zwischen der Datenverarbeitungseinrichtung 2i und der Datenverarbeitungseinrichtung 2j zu überprüfen, weshalb Verschlüsselungsmittel auch in der Datenverarbeitungseinrichtung 2i erforderlich sind.

Fig. 5 zeigt schließlich eine Prinzipskizze eines erfindungsgemäßen Kraftfahrzeugs 14 als Gesamtvorrichtung, in dem verschiedene Steuergeräte 15 als Datenverarbeitungseinrichtungen eine Gruppe 16 mit verschiedenen Anzeigevorrichtungen 17, unter diesen Displayvorrichtungen, als weitere Datenverarbeitungseinrichtungen mit Bilddaten, insbesondere Videodaten, als Nutzdaten versorgen, wie hier nur angedeutet ist. Durch entsprechende Ausbildungen der jeweiligen ersten Schnittstelleneinheiten 5 mit Authentifizierungsbaugruppen 9, das Vorsehen von einer Authentifizierungseinheit 10 sowie Nutzung eines CAN-Bussystems als zweite Kommunikationsverbindung 6 lassen sich Authentifizierungsvorgänge für den Datentransport zu wenigstens einem Teil der Anzeigevorrichtungen 17 durchführen. Topologien wie in den Figuren 1, 3, und 4 können eingesetzt werden.

Es bleibt anzumerken, dass sich der hier beschriebene Authentifizierungsvorgang auch bei paketbasierter Übertragung über die erste Kommunikationsverbindung 4 einsetzen lässt; zudem ist bei zumindest zwei logischen Authentifizierungsbaugruppen 9 auch ein bidirektionaler Datentransport überwachbar.

Der Schlüssel 8 ist bei dem Kraftfahrzeug 14 im Übrigen kraftfahrzeugindividuell, wobei die entsprechenden Schlüssel beispielsweise in einer Datenbank des Herstellers vorgehalten werden können, um bei einer entsprechenden Erweiterung um weitere Datenverarbeitungseinrichtungen, bei denen der Datentransport überwacht werden soll, den korrekten Schlüssel bereitstellen zu können; beispielsweise können auf diese Art und Weise seitens des Herstellers zugelassen und überprüfte Steuergeräte für Spezialfunktionen, beispielsweise Einsatzfahrzeuge, hinzugefügt werden.

## Patentansprüche

1. Verfahren zur Überprüfung des Datentransports von Nutzdaten über eine zwischen zwei ersten Schnittstelleneinheiten (5) realisierte erste Kommunikationsverbindung (4) zwischen zwei jeweiligen Datenverarbeitungseinrichtungen (2a - 2k), wobei die zu übertragenden Nutzdaten in Nutzdatenblöcke aufteilbar sind und wobei wenigstens eine zweite Kommunikationsverbindung (6) zwischen den Datenverarbeitungseinrichtungen (2a - 2k) besteht, die über jeweilige zweite Schnittstelleneinheiten (7) aufgebaut wird,
**dadurch gekennzeichnet,**
**dass** zur Realisierung einer Challenge-Response-Authentifizierung als Challenge eine Abfragen zufällig gewählter Dateneinheiten aus identifizierbaren, zufällig gewählten Nutzdatenblöcken der Nutzdaten, wobei die abgefragten Nutzdaten Antwortdaten bilden, fordernde Anfrage von einer Authentifizierungseinheit (10) unter Nutzung der zweiten Kommunikationsverbindung (6) an die ersten Schnittstelleneinheiten (5) gesendet wird, eine Authentifizierungsbaugruppe (9) der jeweiligen ersten Schnittstelleneinheiten (5) die angeforderten Antwortdaten aus den Nutzdaten extrahiert und an die Authentifizierungseinheit (10) zurückübermittelt und eine erfolgreiche Überprüfung bei Übereinstimmung der Antwortdaten der jeweiligen Authentifizierungsbaugruppen (9) festgestellt wird.

2. Verfahren nach Anspruch 1,
**dadurch gekennzeichnet,**
**dass** eine der Datenverarbeitungseinheiten (2a - 2k) ein Steuergerät (15) und eine weitere Datenverarbeitungseinheit (2a - 2k) eine Anzeigevorrichtung (17) ist, wobei als Nutzdaten auf der Anzeigevorrichtung (17) anzuzeigende Bilddaten verwendet werden, wobei insbesondere die Bilddaten durch Framebeginnanzeiger getrennte Nutzdatenblöcke oder durch Framebeginnanzeiger getrennte, wenigstens einen Nutzdatenblock enthaltende Nutzdatenstrukturen aufweisen.

3. Verfahren nach einem der vorangehenden Ansprüche,
**dadurch gekennzeichnet,**
**dass** die ersten Schnittstelleneinheiten (5) als Mikrochips ausgebildet sind und die Authentifizierungsbaugruppen (9) in die Mikrochips integriert sind.

4. Verfahren nach einem der vorangehenden Ansprüche,
**dadurch gekennzeichnet,**
**dass** die Authentifizierungsbaugruppen (9) einen zyklisch zurückgesetzten Zähler für die Nutzdatenblöcke aufweisen, wobei sich die Anfrage auf eine bei einem Zählerdurchlauf entstehende Gruppe von Nutzdatenblöcken bezieht und zur Identifizierung der Nutzdatenblöcke deren Blockzahl innerhalb der Gruppe verwendet wird.

5. Verfahren nach Anspruch 4,
**dadurch gekennzeichnet,**
**dass** die Anfrage zu Beginn eines neuen Zählerdurchlaufs versendet wird, wobei der Bereich möglicher abzufragender Nutzdatenblöcke zu Beginn der Gruppe derart eingeschränkt wird, dass die Anfrage die Authentifizierungsbaugruppe (9) vor dem Erreichen der ersten abfragbaren Blockzahl erreicht, und/oder der Bereich möglicher abzufragender Nutzdatenblöcke zu Ende der Gruppe derart eingeschränkt wird, dass die Antwortdaten die Authentifizierungseinheit (10) vor dem Beginn eines neuen Zählerdurchlaufs erreichen.

6. Verfahren nach einem der vorangehenden Ansprüche,
**dadurch gekennzeichnet,**
**dass** Identifizierungsdaten zur Identifizierung eines Nutzdatenblocks seitens der ersten Schnittstelleneinheit (5) der Nutzdaten aussendenden Datenverarbeitungseinrichtung (2a - 2k) in Freibereiche des Nutzdatenblocks geschrieben werden.

7. Verfahren nach einem der vorangehenden Ansprüche,
**dadurch gekennzeichnet,**
**dass** die Übertragung der Anfrage zwischen den zweiten Schnittstelleneinheiten (7) mittels eines in diesen abgelegten Schlüssels (8) verschlüsselt erfolgt.

8. Verfahren nach Anspruch 7,
**dadurch gekennzeichnet,**
**dass** mehrere jeweils wenigstens zwei Datenverarbeitungseinrichtungen (2a - 2k) aufweisende Gesamtvorrichtungen (1a - 1c) betrieben werden, wobei für jede Gesamtvorrichtung (1a - 1c) ein unterschiedlicher Schlüssel (8) gewählt wird.

9. Verfahren nach einem der vorangehenden Ansprüche,
**dadurch gekennzeichnet,**
**dass** durch eine sendende der Datenverarbeitungseinrichtungen (2a - 2k) Nutzdaten an mehrere empfangende Datenverarbeitungseinrichtungen (2a - 2k) über eine gemeinsame erste Schnittstelleneinheit (5) gesendet werden, wobei der Datentransport zu einem zu überprüfenden Teil der empfangenden Datenverarbeitungseinrichtungen (2a - 2k) jeweils getrennt überprüft wird.

10. Verfahren nach Anspruch 9,
**dadurch gekennzeichnet,**
**dass** Nutzdatenblöcke für unterschiedliche Datenverarbeitungseinrichtungen (2a - 2k) gemeinsam in einer von der sendenden Datenverarbeitungseinrichtung (2a - 2k) auszugebenden Nutzdatenstruktur gesendet werden, wobei sich Anfragen an erste Schnittstelleneinheiten (5) empfangender Datenverarbeitungseinrichtungen (2a - 2k) auf die dieser Datenverarbeitungseinrichtung (2a - 2k) zuzuordnenden Nutzdatenblöcke beziehen.

11. Verfahren nach Anspruch 10,
**dadurch gekennzeichnet,**
**dass**, insbesondere bei einer Reduzierung der Nutzdatenstruktur durch Entnahme jeweiliger Nutzdatenblöcke in den zugeordneten Datenverarbeitungseinrichtungen (2a - 2k), die Anfrage unter Berücksichtigung einer eine Veränderung der Nutzdatenstruktur auf dem Übertragungsweg und/oder die Einpflegung der Nutzdatenblöcke in die Nutzdatenstruktur beschreibenden Nutzdatenstrukturinformation in der Authentifizierungseinheit (10) formuliert wird.

12. Verfahren nach einem der Ansprüche 9 bis 11,
**dadurch gekennzeichnet,**
**dass** bei einer in der Authentifizierungseinheit (10) nicht bekannten Veränderung der Nutzdatenstruktur in wenigstens einer zwischen der ursprünglich sendenden Datenverarbeitungseinrichtung (2a - 2k) und der letztlich empfangenden Datenverarbeitungseinrichtung (2a - 2k) liegenden Datenverarbeitungseinrichtung (2a- 2k) jede Teilstrecke einzeln anhand entsprechender Anfragen überprüft wird.

13. Verfahren nach einem der vorangehenden Ansprüche,
**dadurch gekennzeichnet,**
**dass** die Authentifizierungseinheit (10) in wenigstens eine zweite Schnittstelleneinheit (7) integriert ist.

14. Verfahren nach einem der vorangehenden Ansprüche,
**dadurch gekennzeichnet,**
**dass** eine insbesondere sendende Datenverarbeitungseinrichtung (2a - 2k) ein Steuergerät (15) eines Kraftfahrzeugs (14) als Gesamtvorrichtung (1a, 1b, 1c) und eine insbesondere empfangende Datenverarbeitungseinrichtung (2a - 2k) eine Displayeinrichtung des Kraftfahrzeugs (14) ist.

15. Kraftfahrzeug (14), aufweisend wenigstens zwei Datenverarbeitungseinrichtungen (2a - 2k), zwischen denen eine durch jeweilige erste Schnittstelleneinheiten (5) der Datenverarbeitungseinrichtungen (2a - 2k) bereitgestellte erste Kommunikationsverbindung (4) zum Datentransport von Nutzdaten und eine durch jeweilige zweite Schnittstelleneinheiten (7) der Datenverarbeitungseinrichtungen (2a - 2k) bereitgestellte zweite Kommunikationsverbindung (6) bestehen, wobei die zu übertragenden Nutzdaten in Nutzdatenblöcke aufteilbar sind,
**dadurch gekennzeichnet,**
**dass** ferner eine Authentifizierungseinheit (10), die zur Realisierung einer Challenge-Response-Authentifizierung als Challenge eine Abfragen zufällig gewählter Dateneinheiten aus identifizierbaren, zufällig gewählten Nutzdatenblöcken der Nutzdaten, wobei die abgefragten Nutzdaten Antwortdaten bilden, fordernde Anfrage unter Nutzung der zweiten Kommunikationsverbindung (6) an die ersten Schnittstelleneinheiten (5) sendet, und jeweils eine Authentifizierungsbaugruppe (9) der jeweiligen ersten Schnittstelleneinheiten (5), die die angeforderten Antwortdaten aus den Nutzdaten extrahiert und an die Authentifizierungseinheit (10) rückübermittelt, vorgesehen sind, wobei durch die Authentifizierungseinheit (10) eine erfolgreiche Überprüfung bei Übereinstimmung der Antwortdaten der jeweiligen Authentifizierungsbaugruppen (9) festgestellt wird.

## Claims

1. Method for checking the data transport across a first communication connection (4), realised between two first interface units (5), between two respective data processing devices (2a-2k), wherein the data to be transported can be divided into data blocks and wherein at least one second communication connection (6) exists between the data processing devices (2a-2k), which is established across respective second interface units (7),
**characterised in**
**that** for realising a challenge-response-authentication, as challenge a request, requesting querying of randomly selected data units out of identifiable, randomly selected data blocks of the data, wherein the queried data form response data, by an authenticating unit (10) using the second communication connection (6), is transmitted to the first interface units (5), an authentication module (9) of the respective first interface units (5) extracts the requested response data out of the data and transmits them back to the authenticating unit (10) and a successful checking is established when the response data of the respective authentication modules (9) concur.

2. Method according to claim 1,
**characterised in**
**that** one of the data processing devices (2a-2k) is a control device (15) and one further data processing device (2a-2k) is a display device (17), wherein as data are used image data to be displayed on the display device (17), wherein in particular the image data have data blocks separated by frame start indicators or data structures separated by frame start indicators and containing at least one data block.

3. Method according to any of the preceding claims,
**characterised in**
**that** the first interface units (5) are in the form of microchips and the authentication modules (9) are integrated in the microchips.

4. Method according to any of the preceding claims,
**characterised in**
**that** the authentication modules (9) have a cyclically reset counter for the data blocks, wherein the request relates to a group, resulting in the case of a counter cycle, of data blocks and for identifying the data blocks their block number within the group is used.

5. Method according to claim 4,
**characterised in**
**that** the request is transmitted at the beginning of a new counter cycle, wherein the range of possible data blocks to be queried is limited at the beginning of the group such that the request reaches the authentication module (9) prior to reaching the first block number which can be queried, and/or the range of possible data blocks to be queried is limited at the end of the group such that the response data reach the authenticating unit (10) prior to the beginning of a new counter cycle.

6. Method according to any of the preceding claims,
**characterised in**
**that** identification data for identifying a data block on the part of the first interface unit (5) of the data processing devices (2a-2k) transmitting the data are written in free regions of the data block.

7. Method according to any of the preceding claims,
**characterised in**
**that** the transmission of the request between the two interface units (7) is carried out in an encrypted manner by means of a code (8) deposited therein.

8. Method according to claim 7,
**characterised in**
**that** several total devices (1a-1c) having respectively at least two data processing devices (2a-2k) are operated, wherein for each total device (1a-1c) a different code (8) is selected.

9. Method according to any of the preceding claims,
**characterised in**
**that** by means of one sending one of the data processing devices (2a-2k) data are transmitted to several receiving data processing devices (2a-2k) via a common first interface unit (5), wherein the data transport to a part, to be checked, of the receiving data processing devices (2a-2k) is checked in each case separately.

10. Method according to claim 9,
**characterised in**
**that** data blocks for different data processing devices (2a-2k) are transmitted together in a data structure to be outputted by the transmitting data processing device (2a-2k), wherein requests to first interface units (5) of receiving data processing devices (2a-2k) are related to the data blocks to be assigned to this data processing device (2a-2k).

11. Method according to claim 10,
**characterised in**
**that**, in particular in the case of a reduction of the data structure by removal of respective data blocks in the assigned data processing devices (2a-2k), the request is formulated taking into consideration a data structure information in the authenticating unit (10) describing a change in the data structure on the transmission path and/or the inputting of the data blocks into the data structure.

12. Method according to any of claims 9 to 11,
**characterised in**
**that** in the case of a change, not known in the authenticating unit (10), of the data structure in at least one data processing device (2a-2k) located between the originally transmitting data processing device (2a-2k) and the most recently receiving data processing device (2a-2k) each section is checked individually with reference to corresponding requests.

13. Method according to any of the preceding claims,
**characterised in**
**that** the authenticating unit (10) is integrated into at least one second interface unit (7).

14. Method according to any of the preceding claims,
**characterised in**
**that** an in particular transmitting data processing device (2a-2k) is a control device (15) of a motor vehicle (14) as total device (1a, 1b, 1c) and an in particular receiving data processing device (2a-2k) is a display device of the motor vehicle (14).

15. Motor vehicle (14), having at least two data processing devices (2a-2k), between which a first communication connection (4), realised between respective first interface units (5) of the data processing devices (2a-2k), for data transport of data and a second communication connection (6) provided by respectively second interface units (7) of the data processing devices (2a-2k) exist, wherein the data to be transmitted can be divided into data blocks,
**characterised in**
**that** furthermore an authenticating unit (10) which, for realising a challenge-response-authentication, as challenge transmits a request, requesting querying of randomly selected data units out of identifiable, randomly selected data blocks of the data, wherein the queried data form response data, using the second communication connection (6) to the first interface units (5), and respectively one authentication module (9) of the respective first interface units (5) are provided, which extracts the requested response data from the data and transmits it back to the authenticating unit (10), wherein by means of the authenticating unit (10) a successful checking is determined when the response data of the respective authentication modules (9) concur.

## Revendications

1. Procédé de contrôle du transport de données de données utiles par le biais d'une première liaison de communication (4) réalisée entre deux premières unités d'interface (5) entre deux dispositifs de traitement de données respectifs (2a - 2k), dans lequel les données utiles à transmettre peuvent être réparties en blocs de données utiles et dans lequel au moins une seconde liaison de communication (6) existe entre les dispositifs de traitement de données (2a - 2k), laquelle est établie via les secondes unités d'interface respectives (7),
**caractérisé en ce que**,
pour la réalisation d'une authentification défi-réponse sous forme de défi, une demande de la part d'une unité d'authentification (10), réclamant des requêtes d'unités de données sélectionnées de manière aléatoire à partir de blocs de données utiles identifiables, sélectionnés de manière aléatoire, des données utiles, les données utiles interrogées formant des données de réponse, est envoyée au moyen de la seconde liaison de communication (6) aux premières unités d'interface (5), un ensemble d'authentification (9) des premières unités d'interface respectives (5) extrait les données de réponse demandées à partir des données utiles et les retransmet à l'unité d'authentification (10) et un contrôle réussi est constaté en cas de concordance des données de réponse des ensembles d'authentification respectifs (9).

2. Procédé selon la revendication 1,
**caractérisé en ce que**
une des unités de traitement de données (2a - 2k) est un appareil de commande (15) et une autre unité de traitement de données (2a - 2k) est un dispositif d'affichage (17), des données d'image devant être affichées sur le dispositif d'affichage (17) étant utilisées en tant que données utiles, dans lequel en particulier les données d'image comportent des blocs de données utiles séparés par des indicateurs de début de trame, ou des structures de données utiles contenant au moins un bloc de données utiles séparées par des indicateurs de début de trame.

3. Procédé selon l'une des revendications précédentes,
**caractérisé en ce que**
les premières unités d'interfaces (5) sont conçues sous forme de micropuces et les ensembles d'authentification (9) sont intégrés dans les micropuces.

4. Procédé selon l'une des revendications précédentes,
**caractérisé en ce que**
les ensembles d'authentification (9) comportent un compteur réinitialisé cycliquement pour les blocs de données utiles, la demande se rapportant à un groupe de blocs de données utiles produit lors d'un passage de compteur, et pour l'identification des blocs de données utiles, leur nombre de blocs à l'intérieur du groupe est utilisé.

5. Procédé selon la revendication 4,
**caractérisé en ce que**
la demande est transmise au début d'un nouveau passage de compteur, dans lequel la zone de blocs de données utiles devant être éventuellement interrogés au début du groupe est limitée de telle sorte que la demande atteint l'ensemble d'authentification (9) avant d'atteindre le premier nombre de blocs interrogeable, et/ou la zone de blocs de données utiles devant être éventuellement interrogés à la fin du groupe est limitée de telle sorte que les données de réponse atteignent l'unité d'authentification (10) avant le début d'un nouveau passage de compteur.

6. Procédé selon l'une des revendications précédentes,
**caractérisé en ce que**
les données d'identification destinées à identifier un bloc de données utile de la part de la première unité d'interface (5) du dispositif de traitement de données (2a - 2k) émettant les données utiles sont écrites dans des zones libres du bloc de données utiles.

7. Procédé selon l'une des revendications précédentes,
**caractérisé en ce que**
le transfert de la demande entre les secondes unités d'interface (7) a lieu de manière cryptée au moyen d'une clé (8) archivée dans celles-ci.

8. Procédé selon la revendication 7,
**caractérisé en ce que**
plusieurs dispositifs globaux (1a - 1c) comportant respectivement au moins deux dispositifs de traitement de données (2a - 2k) sont exploités, une clé différente (8) étant sélectionnée pour chaque dispositif global (1a - 1c).

9. Procédé selon l'une des revendications précédentes,
**caractérisé en ce que**
des données utiles sont transmises par un dispositif émetteur des dispositifs de traitement de données (2a - 2k) à plusieurs dispositifs de traitement de données récepteurs (2a - 2k) par l'intermédiaire d'une première unité d'interface commune (5), dans lequel le transport de données vers une partie à contrôler des dispositifs de traitement de données récepteurs (2a - 2k) est contrôlé respectivement séparément.

10. Procédé selon la revendication 9,
**caractérisé en ce que**
des blocs de données utiles pour différents dispositifs de traitement de données (2a - 2k) sont transmis en commun dans une structure de données utiles devant être délivrée par le dispositif de traitement de données (2a - 2k) émetteur, dans lequel des demandes aux premières unités d'interface (5) des dispositifs de traitement de données récepteurs (2a - 2k) concernent les blocs de données utiles devant être affectés à ce dispositif de traitement de données (2a - 2k).

11. Procédé selon la revendication 10,
**caractérisé en ce que**
en particulier dans le cas d'une réduction de la structure de données utiles par prélèvement des blocs de données utiles respectifs dans les dispositifs de traitement de données affectés (2a - 2k), la demande est formulée dans l'unité d'authentification (10) en tenant compte d'une information de structure de données utiles décrivant une modification de la structure de données utiles sur le parcours de transmission et/ou l'intégration des blocs de données utiles dans la structure de données utiles.

12. Procédé selon l'une des revendications 9 à 11,
**caractérisé en ce que**
dans le cas d'une modification inconnue dans l'unité d'authentification (10) de la structure de données utiles dans au moins un dispositif de traitement de données (2a -2k) situé entre le dispositif de traitement de données (2a -2k) émetteur initial et le dispositif de traitement de données (2a -2k) récepteur final, chaque tronçon est contrôlé individuellement au moyen des demandes correspondantes.

13. Procédé selon l'une des revendications précédentes,
**caractérisé en ce que**
l'unité d'authentification (10) est intégrée dans au moins une seconde unité d'interface (7).

14. Procédé selon l'une des revendications précédentes,
**caractérisé en ce que**
un dispositif de traitement de données (2a -2k) en particulier émetteur est un appareil de commande (15) d'un véhicule automobile (14) sous forme de dispositif global (1a, 1b, 1c) et un dispositif de traitement de données (2a -2k) en particulier récepteur est un dispositif d'affichage du véhicule automobile (14).

15. Véhicule automobile (14) comportant au moins deux dispositifs de traitement de données (2a -2k), entre lesquels existent une première liaison de communication (4) fournie par les premières unités d'interface respectives (5) des dispositifs de traitement de données (2a -2k) pour le transport de données de données utiles et une seconde liaison de communication (6) fournie par les secondes unités d'interface respectives (7) des dispositifs de traitement de données (2a -2k), les données utiles à transmettre peuvent être réparties dans des blocs de données utiles,
**caractérisé en ce que**
de plus une unité d'authentification (10) qui émet pour la réalisation d'une authentification défi-réponse sous forme de défi, une demande réclamant des requêtes d'unités de données sélectionnées de manière aléatoire à partir de blocs de données utiles identifiables, sélectionnés de manière aléatoire, des données utiles, les données utiles interrogées formant des données de réponse, au moyen de la seconde liaison de communication (6) aux premières unités d'interface (5), et respectivement un ensemble d'authentification (9) des premières unités d'interface respectives (5) qui extrait les données de réponse demandées à partir des données utiles et les retransmet à l'unité d'authentification (10), sont prévus, l'unité d'authentification (10) permettant de constater un contrôle réussi en cas de concordance des données de réponse des ensembles d'authentification respectifs (9).
